(19) Europäisches Patentamt

European Patent Office

Office européen des brevets

(11) **EP 1 351 413 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(51) Int Cl.:
*H04B 7/185* (2006.01)    *H04B 7/195* (2006.01)

(21) Anmeldenummer: **03004697.3**

(22) Anmeldetag: **04.03.2003**

(54) **Globales Kommunikationssystem unter Einbeziehung von geostationären Kommunikationssatelliten und hochfliegenden Kommunikationskörper**

Global communication system using geostationary satellites and high altitude communication platforms

Système de communication global utilisant des satellites géostationnaires et des plates-formes de communication de haute altitude

(84) Benannte Vertragsstaaten:
**DE FR GB IT SE**

(30) Priorität: **04.04.2002 DE 10214977**

(43) Veröffentlichungstag der Anmeldung:
**08.10.2003 Patentblatt 2003/41**

(73) Patentinhaber: **Deutsches Zentrum für Luft- und Raumfahrt e.V.
51147 Köln (DE)**

(72) Erfinder: **Giggenbach, Dirk, Dipl.-Ing.
80687 München (DE)**

(74) Vertreter: **von Kirschbaum, Albrecht
Patentanwalt,
Postfach 15 20
82102 Germering (DE)**

(56) Entgegenhaltungen:
**WO-A-01/01710**          **WO-A-99/13598**
**WO-A-99/23769**          **US-A- 6 151 308**

**Beschreibung**

Die Erfindung bezieht sich auf ein globales Kommunikationssystem unter Einbeziehung von geostationären Kommunikationssatelliten, die über dem Äquator in einer geosynchronen Bahn fliegen und für typische Satellitenkommunikationsdienste wie z.B. Mobiltelefonie, Multimediadienste, Telefongesprächvermittlung, Fernsehübertragung oder dergleichen genutzt werden, und in einer ersten Alternativform unter zusätzlicher Miteinbeziehung einer einzigen, in der Stratosphäre positionierten atmosphärischen Kommunikationsplattform, die als High-Altitude-Platform bezeichnet wird und in einer solchen Höhe und geographischen Lage positioniert ist, dass zwischen jedem der geostationären Kommunikationssatelliten und der Kommunikationsplattform eine Sichtverbindung, also eine sogenannte "Line of Sight (LOS)" besteht, oder in einer zweiten Alternativform unter zusätzlicher Miteinbeziehung von zwei oder mehr solchen in der Stratosphäre positionierten atmosphärischen Kommunikationsplattformen, die in einer solchen Höhe und geographischen Lage positioniert sind, dass einerseits zwischen ihnen untereinander eine Sichtverbindung, also ebenfalls eine sogenannte "Line of Sight (LOS)" besteht und andererseits zwischen jedem der geostationären Kommunikationssatelliten und zumindest einer der Kommunikationsplattformen auch eine solche Sichtverbindung vorliegt.

Die Satellitenkommunikationssysteme, welche die Nutzer auf der Erde mit hochratigen Kommunikationsdiensten versorgen, werden in Zukunft untereinander vernetzt. Dies bedeutet, dass jeder Satellit nicht nur direkt mit einer oder mehreren Bodenstationen verbunden ist, von oder zu denen er per Mikrowellenlink Informationen überträgt, sondern dass er auch direkt mit anderen Satelliten kommuniziert. Moderne Satellitenkommunikationskonstellationen arbeiten demnach mit sogenannten Inter-Satelliten-Links (ISLs) zum direkten Datenaustausch zwischen den Kommunikationssatelliten. Dies verkürzt die Wege und damit Übertragungszeiten und erhöht die Zuverlässigkeit von Kommunikationsverbindungen, da die oft überflüssigen Umwege über Bodenstationen vermieden werden. Außerdem werden dadurch zusätzlich Kosten gespart. Im Satellitentelefonie-System "Iridium" sind derartige Inter-Satelliten-Links bereits implementiert. Da es sich bei Inter-Satelliten-Links um Punktzu-Punkt-Verbindungen handelt, können hierbei besonders vorteilhaft optische Inter-Satelliten-Links (OISLs) eingesetzt werden, da diese im Vergleich zu Mikrowellen-Links einen erheblich geringeren Leistungs- und Platzbedarf bei deutlich höheren Übertragungsraten aufweisen. Diese Technik wurde in den letzten Jahren bis zur Marktreife entwickelt.

In idealer Weise werden in einem geostationäre Kommunikationssatelliten verwendenden Kommunikationssystem zur globalen Erdabdeckung drei geostationäre Kommunikationssatelliten im gleichseitigen Dreieck (geographischer Längengradabstand 120°) auf dem geostationären Gürtel in einer Höhe von 35790 km über dem Äquator, also in einem Orbit mit einem Radius von 42168 km verteilt und direkt miteinander durch drei Inter-Satelliten-Links verbunden. Der Abstand zwischen zwei geostationären Satelliten beträgt in einem solchen regelmäßigen Dreisatelliten-System dann 73037 km. Sollen dagegen zwei geostationäre Satelliten miteinander verbunden werden, welche den maximalen Längengradabstand, nämlich 171,3°, voneinander haben, bei dem eine Verbindung gerade noch möglich ist, so beträgt ihr Abstand sogar 83366 km. Für größere Separationen als die erwähnten 171,3° geographische Länge verhindert die Erdkugel eine direkte Sichtverbindung.

Bei den erwähnten bekannten Systemen ergibt sich eine Reihe von gravierenden Nachteilen. Zum ersten sind die durch die Inter-Satelliten-Links zwischen den geostationären Kommunikationssatelliten zu überbrückenden Entfernungen mit über 70000 Kilometern extrem groß, was die Übertragungsraten der entsprechenden Terminals einschränkt und große Antennen und hohe Sendeleistungen erfordert. Zum zweiten können klassische Inter-Satelliten-Links zwischen in Opposition positionierten Kommunikationssatelliten keine Kommunikationsverbindungen herstellen, da die Erde ein unvermeidbares Sichthindernis zwischen zwei geostationären Satelliten bildet, die zueinander einen geographischen Längengradabstand von 180° haben. Darüber hinaus schränkt die erforderliche Mindestelevation für Bodenterminals, die je nach Systemauslegung und Trägerfrequenz 10° bis 20° beträgt, den Bereich der Erdoberfläche ein, von dem aus mit einem geostationären Kommunikationssatelliten kommuniziert werden kann. Daher können polnahe Gebiete nicht abgedeckt werden. Insbesondere für polare Flugrouten stellt dies ein Kommunikations- und Sicherheitsproblem dar. Schließlich sind bei der Vernetzung von mehr als zwei Kommunikationssatelliten in einer globalen Konstellation pro Satellit mindestens zwei und mehr für Inter-Satelliten-Links ausgelegte Terminals nötig, was einen Mehraufwand an Gewicht und Kosten erfordert und eine zusätzliche Fehleranfälligkeit auf Grund des erforderlichen On-Board-Daten-Processing und -Routing bedeutet.

Es ist also festzustellen, dass die zu überbrückenden Link-Entfernungen insbesondere zwischen geostationären Satelliten, die bezüglich der Erdoberfläche eine konstante Position haben und daher für Kommunikationszwecke besonders gut geeignet sind, äußerst groß sind. Außerdem erfordert die Sichtabschattung zwischen den Satelliten durch die dazwischen stehende Erde zusätzliche Relaisstationen auf der Erde. Eine Problemzone bei der globalen Kommunikationsabdeckung durch geostationäre Satelliten sind die Polgebiete der Erde. Diese können von den über dem Äquator stehenden geostationären Satelliten nicht ausreichend eingesehen werden; insbesondere können geostationäre Satelliten wegen der meist erforderlichen Mindestelevationen für einen Mikrowellen-Link von mindestens 10° nicht für Kommunikationszwecke in polaren Regionen genutzt werden. Gerade für die zukünftigen Flugrouten über die Erdpole ist aber eine Kommunikationsmöglichkeit im Polbereich unverzichtbar.

Aus US-A-6 151 308 ist ein System zur Kommunikation zwischen Funkkommunikationseinrichtungen bekannt, das für typische Satellitenkommunikationsdienste wie z.B. Mobiltelefonie, Multimediadienste, Telefongesprächvermittlung, Fernsehübertragung oder dergleichen genutzt werden kann und ein oder mehrere in der Stratosphäre nicht erdumlaufend positionierte, atmosphärische Kommunikationsplattformen verwendet, um für eine Schnittstelle zwischen den Funkkommunikationseinrichtungen zu sorgen. Eine oder mehrere Kommunikationsplattformen können in einem globalen Kommunikationssystem zur Überbrückung zwischen geostationären Kommunikationssatelliten benutzt werden, die sich nicht in LOS-Sichtverbindung befinden und somit nicht direkt miteinander kommunizieren können. Hierbei können auch mehrere der in großer Höhe fliegenden Kommunikationsplattformen Verbindungen unter sich haben.

Aus WO-A-99/13598 ist ein Kommunikationssystem bekannt, das ebenfalls für typische Satellitenkommunikationsdienste wie z.B. Mobiltelefonie, Multimediadienste, Telefongesprächvermittlung, Fernsehübertragung oder dergleichen genutzt werden kann und bei dem in der Stratosphäre flugzeug- oder ballongetragene, atmosphärische Kommunikationsplattformen auf der einen Seite mit einem Netzwerk aus sich auf einer Erdumlaufbahn bewegenden Kommunikationssatelliten und auf der anderen Seite mit Nutzern auf dem Erdboden drahtlos kommunizieren können. Die oberhalb des gewöhnlichen Flugverkehrs und des Wettergeschehens betriebenen Kommunikationsplattformen werden als reine Relaisstationen zwischen den Kommunikationssatelliten und den bodenseitigen Nutzern verwendet, um eine bessere Verbindungsqualität von den Kommunikationssatelliten zu den bodenseitigen Nutzern herzustellen. Die in großer Höhe fliegenden Kommunikationsplattformen können zur Überdeckung eines Gebiets mit relativ hoher Sendeleistung arbeiten und lassen sich bei der Kommunikation mit den Kommunikationssatelliten mit sehr hohen Frequenzen betreiben, die für eine Breitbandkommunikation mit den bodengebundenen Nutzern wegen der Wetterbeeinträchtigungen nicht geeignet sind. Mit den am Boden befindlichen Nutzern kann dann die Kommunikation der Kommunikationsplattformen mit erheblich niedrigeren Frequenzen erfolgen, die durch Wettereinwirkungen weniger gedämpft und verzerrt werden. Über polaren Regionen können die Kommunikationsplattformen in vergleichsweise niedrigeren Höhen als über Tropenregionen betrieben werden, da in den Tropenbereichen das Wetter (Tropopause) höher in die Atmosphäre reicht.

Der Erfindung liegt vor allem die Aufgabe zu Grunde, die bei modernen Satellitenkommunikationskonstellationen zu überbrückenden Link-Entfernungen bei Verhinderung von Sichtabschattungen durch die Erde zu verringern und bei der globalen Kommunikationsabdeckung durch geostationäre Kommunikationssatelliten auch die Polgebiete der Erde sicher und zuverlässig abzudecken, was vor allem bei Benutzung der zukünftigen Flugrouten über die Erdpole für eine Kommunikation im Polbereich unabdingbar ist.

Gemäß der vorliegenden Erfindung, die sich auf ein globales Kommunikationssystem der eingangs genannten Art bezieht, wird diese Aufgabe dadurch gelöst, dass in der ersten Alternativform die einzige Kommunikationsplattform im wesentlichen senkrecht über dem Nord- oder Südpol positioniert ist und eine LOS-Sichtverbindung zwischen jedem der geostationären Kommunikationssatelliten und dieser einzigen Kommunikationsplattform besteht, die eine Relaisstation zwischen den geostationären Kommunikationssatelliten bildet, und dass in der zweiten Alternativform die zwei oder mehr miteinander in LOS-Sichtverbindung stehenden Kommunikationsplattformen nicht senkrecht über dem Nord- bzw. Südpol, sondern in einer davon abweichenden geographischen Breite nahe dem Nord- bzw. Südpol in der Stratosphäre positioniert sind, und eine LOS-Sichtverbindung zwischen jedem der geostationären Kommunikationssatelliten und zumindest einer der über dem betreffenden Polgebiet befindlichen Kommunikationsplattformen besteht, die Relaisstationen zu den geostationären Kommunikationssatelliten bilden.

Die Erfindung ermöglicht somit durch eine Konstellation aus geostationären Kommunikationssatelliten und polaren stratosphärischen Kommunikationsplattformen eine vorteilhafte globale Vernetzung von Kommunikationssatelliten und eine gleichzeitige Abdeckung der Polarregionen mit Kommunikationsdiensten.

Mit einer einzigen atmosphärischen Kommunikationsplattform in der Stratosphäre in einer Höhe von mindestens 80 km direkt über dem Pol sind Sichtverbindungen zum gesamten äquatorialen Gürtel der geostationären Kommunikationssatelliten möglich, wobei allerdings zu berücksichtigen ist, dass die größte bisher mit stratosphärischen Ballons erreichte Höhe bei etwa 51 km liegt.

Solange ohne Schwierigkeiten größere Höhen einer Kommunikationsplattform nicht- zu- erreichen sind, bietet es sich daher an, zwei oder mehr atmosphärische Kommunikationsplattformen auf technisch problemlos machbarer Höhe über einem Breitengrad kleiner als 90° seitlich vom Pol zu positionieren und diese wiederum untereinander übertragungsmäßig zu vernetzen. Aufgrund des etwas geringeren Stationierungsbreitengrades können diese polnah positionierten Kommunikationsplattformen nun eine direkte Verbindung mit den geostationären Kommunikationssatelliten auf der äquatorialen Erdumlaufbahn aufbauen. Erheblich geringere stratosphärische Windgeschwindigkeiten in Polnähe als z.B. in mittleren bis subtropischen Breiten vereinfachen die Positionserhaltung und Positionssteuerung der polnahen Kommunikationsplattformen.

Obwohl die polnahen Kommunikationsplattformen prinzipiell nicht nur mit geostationären Kommunikationssatelliten, sondern auch mit Kommunikationssatelliten auf anderen Satellitenumlaufbahnen Verbindung aufnehmen können, sind die geostationären Kommunikationssatelliten dafür besonders prädestiniert, da eine Informationsübertragungsverbindung zwischen einer polnahen Kommunikationsplattform und einem geostationären Kommunikationssatelliten aufgrund der ständigen Sichtbarkeit zwischen ihnen dauerhaft bestehen bleiben kann. Die zu überbrückende Distanz zwischen einer polnahen Kommunikationsplattform und einem geostationären Kommunikationssatelliten beträgt im Falle eines Systems mit drei geographisch gleichmäßig über dem Äquator verteilten geostationären Satelliten dann etwa 42000 km.

Bei Vorhandensein mehrerer Kommunikationsplattformen über einem Polgebiet ist in vorteilhafter Weise zwischen diesen jeweils eine optische Freistrahlverbindung, d.h. ein sogenanntes Optical Free-Space Communications Link (OFCL), vorgesehen und zwischen der/den Kommunikationsplattform/en und den mit dieser/n in Sichtverbindung stehenden geostationären Kommunikationssatelliten bestehen ebenfalls optische Freistrahlverbindungen. Grundsätzlich können diese Übertragungsverbindungen auch durch Mikrowellen-Richtfunkverbindungen realisiert werden. Die Kommunikationsverbindungen zwischen den polnahen Kommunikationsplattformen untereinander und zwischen den polnahen Kommunikationsplattformen und geostationären Kommunikationssatelliten werden also vorteilhaft durch optische Freiraumkommunikationsterminals hergestellt, wenn auch diese Aufgabe von Mikrowellenterminals übernommen werden könnte. Optische Freiraumkommunikationsterminals haben allerdings den Vorteil, extrem leicht und energiesparend bei gleichzeitig höchstmöglichen Datenraten zu sein. Außerdem ist die Kommunikationsverbindung zwischen einer Kommunikationsplattform und einem Kommunikationssatelliten auf Grund der niedrigen atmosphärischen Dämpfung und der geringen Turbulenzbeeinflussung ein idealer Anwendungsfall für atmosphärisch-optische Freiraumkommunikationsterminals. Ein weiterer Vorteil ist die Vermeidung von Frequenzvergabe-Einschränkungen im Mikrowellen-Frequenzbereich.

Grundsätzlich kann ein gemäß der vorliegenden Erfindung aufgebautes globales Kommunikationssystem auch durch eine Kombination von optischen Freistrahlverbindungen und Richtfunkverbindungen realisiert werden.

In zweckmäßiger Weise sind bei dem System nach der Erfindung die geostationären Kommunikationssatelliten untereinander über eine oder mehrere im Polbereich positionierte Kommunikationsplattformen als Vermittlungsknoten vernetzt, so dass pro geostationärem Kommunikationssatelliten nur ein optisches Freistrahlterminal oder Richtfunkterminal anstelle von sonst zwei bei Inter-Satelliten-Links erforderlich ist.

Durch die Erfindung wird es ermöglicht, dass zwei in Opposition stehende, d.h. um 180 Längengrade zueinander versetzte geostationäre Kommunikationssatelliten über eine oder mehrere im Polbereich positionierte Kommunikationsplattformen als Vermittlungsknoten verbunden sind.

Die polnahen Kommunikationsplattformen des erfindungsgemäß ausgebildeten Systems können in vorteilhafter Weise an einem stratosphärischen Ballon angebracht sein. Sie können aber entsprechend anderen zweckmäßigen Realisierungsformen auch an einem ionengetriebenen Zeppelin oder an einem stratosphärischen Leichtbauflugzeug angebracht sein. Die Positionserhaltung und Positionssteuerung der Kommunikationsplattformen kann dabei durch Flugmotoren sichergestellt werden.

Bei Verwendung von zwei oder mehr polnahen Kommunikationsplattformen im erfindungsgemäß ausgebildeten globalen Kommunikationssystem haben diese vorzugsweise einen typischen Abstand von etwa 500 km bis 1300 km.

Eine vorteilhafte Weiterbildung der Erfindung ist durch eine Stromversorgung der polnahen Kommunikationsplattformen mittels Solarzellen gekennzeichnet, welche auf Grund der schrägstehenden Erdrotationsachse zur Sonnenekliptik im jeweiligen Sommerhalbjahr ununterbrochen mit Sonnenenergie versorgt werden. In zweckmäßiger Weise sind dann eine oder mehrere Kommunikationsplattformen sowohl über dem Nordpolbereich als auch über dem Südpolbereich positioniert, wobei halbjährlich zwischen ihnen gewechselt wird, so dass die jeweils für mehr als ein halbes Jahr gewährleistete Ausleuchtung der polnahen Kommunikationsplattformen durch Sonnenstrahlung zur ununterbrochenen solaren Energieversorgung ganzjährig genutzt werden kann.

Eine andere' Weiterbildung eines entsprechend der Erfindung ausgebildeten globalen Kommunikationssystem besteht darin, dass an der/den in Polnähe positionierten Kommunikationsplattform/en zusätzlich Mobilfunkantennen zur Versorgung der Polarregion vorgesehen sind, so dass Flugzeuge auf polaren Flugrouten und andere Nutzer in den Polregionen mit Kommunikationsdiensten auf der Basis von Mobilfunk-Kommunikationstechnik mit Kommunikationsdiensten abgedeckt sind, wobei durch die optische Vernetzung oder Richtfunk-Vernetzung der polnahen Kommunikationsplattformen mit den geostationären Kommunikationssatelliten die Anbindung an das globale Kommunikationsnetz erfolgt.

Die Erfindung wird nachfolgend noch anhand von Zeichnungen erläutert. Es zeigen:

Fig.1    Inter-Satelliten-Links von drei geostationären Kommunikationssatelliten auf konventionelle Weise,

Fig.2    im Vergleich dazu Inter-Satelliten-Links von drei geostationären Kommunikationssatelliten mit drei polnahen Kommunikationsplattformen als Relaisstationen entsprechend der Erfindung, und

Fig.3    eine Prinzipdarstellung zur Ableitung von Formeln für die Dimensionierung der Konstellation bei zwei polnahen Kommunikationsplattformen und zwei geostationären Kommunikationssatelliten.

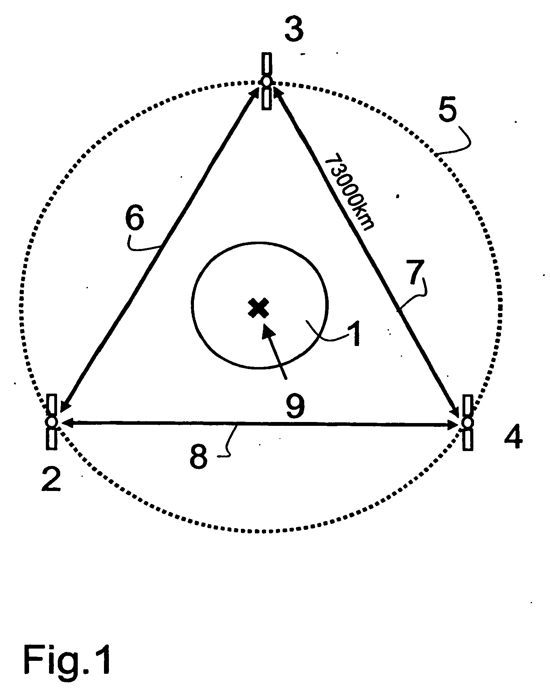

In Fig.1 ist ein Kommunikationssystem zur globalen Abdeckung der Erde 1 mit drei geostationären Kommunikationssatelliten 2, 3 und 4 in herkömmlicher Weise dargestellt. Die drei geostationären Kommunikationssatelliten 2, 3 und 4 sind in einem gleichseitigen Dreieck (Längengradabstand von 120°) auf dem geostationären Gürtel in 35790 km über dem Äquator der Erde 1, d.h. auf einer Erdumlaufbahn 5 mit dem Radius 42168 km, verteilt und direkt miteinander durch drei Inter-Satelliten-Links 6, 7 und 8 verbunden. Der Abstand jeweils zwischen zwei geostationären Kommunikationssatelliten 2, 3 bzw. 4 beträgt dann ca. 73000 km. Mit 9 ist ein geographischer Pol (Nord- oder Südpol) der Erde 1 bezeichnet, durch den die Erdachse verläuft.

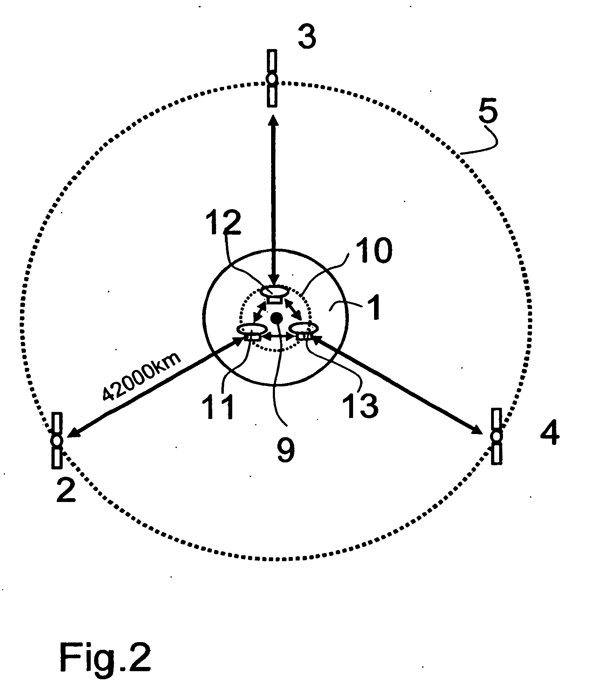

In Fig.2 ist die gleiche Positionierung und Anordnung der geostationären Kommunikationssatelliten 2, 3 und 4 auf der geostationären Erdumlaufbahn 5 angenommen, d.h. wiederum gleichmäßige Längengradabstände von jeweils 120° über der Erde 1. Über einem Breitengrad 10 in Nähe des Poles 9 sind in einer Höhe von beispielsweise 35 km ebenfalls möglichst in einem gleichseitigen Dreieck drei Kommunikationsplattformen 11, 12 und 13 positioniert, die z.B. jeweils an einem stratosphärischen Ballon angebracht sein können. Die Kommunikationswege jeweils zwischen zwei der drei geostationären Kommunikationssatelliten 2, 3 und 4 verlaufen hierbei über zwei der drei Kommunikationsplattformen 11, 12 und 13. So verläuft z.B. der Kommunikationsweg vom Kommunikationssatelliten 2 zum Kommunikationssatelliten 3 über die Kommunikationsplattformen 11 und 12, der Kommunikationsweg vom Kommunikationssatelliten 2 zum Kommunikationssatelliten 4 über die Kommunikationsplattformen 11 und 13 und der Kommunikationsweg vom Kommunikationssatelliten 3 zum Kommunikationssatelliten 4 über die Kommunikationsplattformen 12 und 13. Die maximal zu überbrückende Distanz zwischen zwei Kommunikationseinheiten, also z.B. zwischen dem geostationären Kommunikationssatelliten 2 und der polnahen Kommunikationsplattform 11, beträgt hierbei etwa 42000 km, was nur etwa 55 % der Strecke im gleichseitigen Dreieck nach Fig.1 ausmacht.

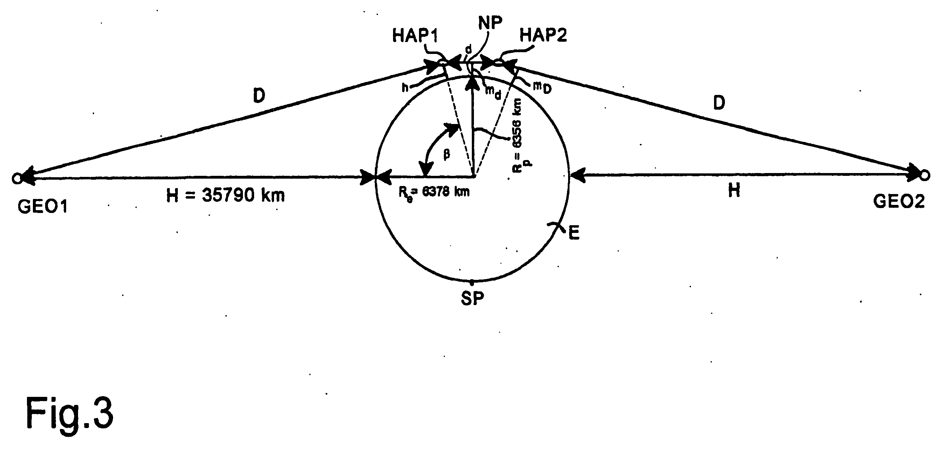

Unter Heranziehung von Fig.3 werden nachfolgend Formeln für die Dimensionierung der Konstellation von polnahen Kommunikationsplattformen und geostationären Kommunikationssatelliten bei zwei polnahen Kommunikationsplattformen abgeleitet. Hierzu werden folgende geometrische Größen definiert:

$H$      Höhe der geostationären Kommunikationssatelliten GEO1 und GEO2 über der Oberfläche der Erde E;

$h$      Höhe der polnahen Kommunikationsplättformen HAP1 und HAP2 über der Oberfläche der Erde E;

$D$      Distanz zwischen geostationären Kommunikationssatelliten GEO1 bzw. GEO2 und nächstliegender polnaher Kommunikationsplattform HAP1 bzw. HAP2;

$d$      Distanz zwischen den beiden polnahen Kommunikationsplattformen HAP1 und HAP2;

$m_d$      minimale Höhe der optischen Verbindung zwischen den beiden polnahen Kommunikationsplattformen HAP1 und HAP2 über der Oberfläche der Erde E;

$m_D$      minimale Höhe der optischen Verbindung zwischen den beiden polnahen Kommunikationsplattformen HAP1 bzw. HAP2 und der jeweils nächsten der beiden geostationären Kommunikationssatelliten GEO1 bzw. GEO2 über der Oberfläche der Erde E;

$R_p$      Erdradius zum Nordpol NP der Erde E (Südpol SP);

$R_e$      Erdradius zum Äquator der Erde E;

$\beta$      Breitengrad der beiden polnahen Kommunikationsplattformen HAP1 und HAP2.

Aus einfachen geometrischen Zusammenhängen und, da die Erde in etwa eine leicht abgeflachte Kugel ist, unter Verwendung von $R_p$ für den polnahen Erdradius und $R_e$ für den äquatornahen Erdradius ergeben sich die nachfolgend angegebenen Formeln, allerdings zunächst nur für die um 180° versetzte Anordnung der polnahen Kommunikationsplattformen HAP1 und HAP2, wie sie in Fig.3 dargestellt ist. Als Beispielwerte wurden die technisch problemlos machbaren 35 km Flughöhe $h$ der Kommunikationsplattformen HAP1 und HAP2 und eine Mindest-Linkhöhe $m_d$, $m_D$ von 8 km gewählt, da in der polnahen Atmosphäre dort bereits die Stratosphäre beginnt und sich somit das Wettergeschehen unterhalb dieser Höhe hält.

Für alle Konstellationen allgemein gültig berechnet sich der Abstand $d$ zwischen zwei Kommunikationsplattformen HAP1 und HAP2 auf der atmosphärischen Höhe $h$ mit der Mindestlinkhöhe $m_d$ über Grund zu:

$$d(h, m_d) = 2 \cdot \sqrt{h^2 + 2hR_P - m_d^2 - 2m_dR_P} \qquad (1)$$

$d$ (35 km, 8 km) = 1174 km.

Für den Mindest-Breitengrad $\beta_{min}$ der zwei Kommunikationsplattformen HAP1 und HAP2 ergibt sich, um eine Sichtverbindung zwischen den beiden Kommunikationsplattformen HAP1 und HAP2 zu gewährleisten:

$$\beta_{min}(h, m_d) = 90° - \arccos\left(\frac{m_d + R_P}{h + R_P}\right) \qquad (2)$$

$\beta_{min}$ (35 km, 8 km) $\geq$ 84,7°.

Der gerade Abstand der zwei Kommunikationsplattformen HAP1 und HAP2 und damit die Distanz für den optischen Freiraum-Kommunikationslink OFCL (Optical Free-Space Communications Link) beträgt dann:

$$d(h, \beta) = 2 \cdot (R_P + h) \cdot \sin(90° - \beta) \qquad (3)$$

d(35 km, 85°) = 1114 km.

Die minimale Höhe $m_d$ des Links zwischen zwei polnahen Kommunikationsplattformen HAP1 und HAP2, bei zwei um 180° Länge versetzten Kommunikationsplattformen also genau über dem Pol, ist

$$m_d(h, \beta) = (R_P + h) \cdot \cos(90° - \beta) - R_P \qquad (4)$$

$m_d$ (35 km, 85°) = 10,7 km.

Bei einer geforderten Mindest-Linkhöhe $m_d$ über dem Pol bei zwei um 180° Länge versetzten polnahen Kommunikationsplattformen HAP1 und HAP2 ergibt sich folgende Bedingung für die erforderliche Mindest-Flughöhe $h$ der beiden Kommunikationsplattformen HAP1 und HAP2, wobei beide Kommunikationsplattformen auf gleicher Höhe fliegen:

$$h(m_d, \beta) = \frac{\tan(90° - \beta)}{\sin(90° - \beta)}(m_d + R_P) - R_P = \cos^{-1}(90° - \beta) \cdot (m_d + R_P) - R_P \qquad (5)$$

h (8 km, 85°)= 32 km.

Die Linkdistanz $D$ von der Kommunikationsplattform HAP1 zum geostationären Kommunikationssatelliten GEO1 bzw. von der Kommunikationsplattform HAP2 zum geostationären Kommunikationssatelliten GEO2 berechnet sich aus dem Abschnitt $D_2$ von der Kommunikationsplattform HAP1 bzw. HAP2 bis zum niedrigsten Punkt des Links und der restlichen Strecke $D_1$ bis zum geostationären Kommunikationssatelliten GEO1 bzw. GEO2 zu:

$$D(h, m_D) = D_1 + D_2 = \sqrt{(R_e + H)^2 - (R_P + m_D)^2} + \sqrt{(R_P + h)^2 - (R_P + m_D)^2} \qquad (6)$$

D (35 km, 8 km) = 42272 km.

Die Signallaufzeit auf einer Verbindung zwischen einer Kommunikationsplattform HAP1 bzw. HAP2 und dem geostationären Kommunikationssatelliten GEO1 bzw. GEO2 berechnet sich mit der Lichtgeschwindigkeit $c$ zu:

$$t_D(D) = D/c \; ; \quad c = 299793 \text{ km/s} \qquad (7)$$

$t_D$ (42272 km) = 141 ms.

Bei der Dimensionierung der Konstellation sind mindestens die folgenden geometrischen Randbedingungen zu berücksichtigen:

1) $m_d \gg 0$ bzw. $m_d > m_{d-min}$ (sinnvoll: $m_d >$ typische örtliche obere Wolkengrenze, ca. 8 km)

2) $h < h_{max}$ (momentan technisch machbar: ca. 40 km)

3) Erforderliche Mindest-Linkhöhe $m_D$ für die Verbindung zwischen der Kommunikationsplattform HAP1 bzw. HAP2 und dem geostationären Kommunikationssatelliten GEO1 bzw. GEO2: Bei idealer Längengrad-Positionierung der Kommunikationsplattform HAP1 bzw. HAP2, d.h. auf dem gleichen Längengrad wie der geostationäre Kommunikationssatellit GEO1 bzw. GEO2, ergibt sich bei einem Breitengrad $\beta_{tangential}$ von über ca. 81,3° [exakt: $\cos(\beta_{tangential})$ $=(R_p+h)/(R_e+H)$] ein Sichtwinkel des geostationären Kommunikationssatelliten GEO1 bzw. GEO2 von der Kommunikationsplattform HAP1 bzw. HAP2 aus unter negativer Elevation, d.h. die Ausgangsrichtung der Verbindungslinie zwischen der Kommunikationsplattform HAP1 bzw. HAP2 und dem geostationären Kommunikationssatelliten GEO1 bzw. GEO2 zeigt von der Kommunikationsplattform HAP1 bzw. HAP2 aus nach unten. Damit nähert sich die Verbindungslinie zunächst noch an die Erdoberfläche an, bevor sie sich von der Erde E in Richtung zum geostationären Kommunikationssatelliten GEO1 bzw. GEO2 entfernt. Damit dabei eine Mindestlinkhöhe $m_d$ nicht unterschritten wird, muss die Kommunikationsplattform HAP1 bzw. HAP2 auf maximal $\beta_{max}$ geographische Breite positioniert sein:

$$\beta_{max}(h, m_D) = \arccos\left(\frac{R_P + m_D}{R_P + h}\right) + \arccos\left(\frac{m_D + R_P}{R_e + H}\right) \quad (8)$$

$\beta_{max}$(35 km, 8 km) = 86,6°.

Die Bedingung für $\beta_{max}$ muss mit der Formel (2) kombiniert werden, womit sich der Breitengradbereich für die Positionierung der polnahen Kommunikationsplattform HAP1 bzw. HAP2 einschränkt auf:

$$90° - \arccos\left(\frac{m_d + R_P}{h + R_P}\right) < \beta(h, m_D, m_d) < \arccos\left(\frac{m_d + R_P}{h + R_P}\right) + \arccos\left(\frac{m_D + R_P}{R_e + H}\right). \quad (9)$$

Mit den technisch plausiblen Werten $h$ = 35 km und $m_D = m_d$ = 8 km ergibt sich der Breitengradbereich von 84,7° bis 86,6° für die Positionierung der polnahen Kommunikationsplattform HAP1 bzw. HAP2.
Die folgende Bedingung "Längengrad-unabhängige Sichtbarkeit" wäre für ein System aus polnahen Kommunikationsplattformen und geostationären. Kommunikationssatelliten wünschenswert, ist aber mit nur zwei Kommunikationsplattformen HAP1 und HAP2 technisch nicht realisierbar, mit drei dagegen schon, wie im weiteren gezeigt wird.
Nachfolgend wird auf die Längengrad-unabhängige Sichtbarkeit zwischen polnaher Kommunikationsplattform und geostationärem Kommunikationssatelliten eingegangen. Um eine ständige Sichtverbindung bei zwei Kommunikationsplattformen HAP1 und HAP2 zu den geostationären Kommunikationssatelliten GEO1 bzw. GEO2 nicht nur bei gleichem Längengrad der Kommunikationsplattform HAP1 und des geostationären Kommunikationssatelliten GEO1 bzw. der Kommunikationsplattform HAP2 und des geostationären Kommunikationssatelliten GEO2, sondern auch unabhängig vom Längengrad garantieren zu können, muss die Sichtverbindung zum geostationären Kommunikationssatelliten GEO1 bzw. GEO2 für jede Kommunikationsplattform HAP1 bzw. HAP2 für mindestens 180° gegeben sein. Der ungünstigste Fall ergibt sich dabei, wenn die geostationären Kommunikationssatelliten GEO1 bzw. GEO2 und die polnahen Kommunikationsplattformen HAP1 bzw. HAP2 um 90° versetzte Längengradpositionen aufweisen, so dass also die Kommunikationsplattform HAP1 bzw. HAP2 für den geostationären Kommunikationssatelliten GEO1 bzw. GEO2 in etwa gerade am Horizont verschwindet. Der Link darf dann nicht tiefer als bis zur Höhe $m_{D-90°}$ in die Erdatmosphäre eindringen ($m_{D-90°}$ ist nicht aus Fig.3 ersichtlich). Dieser Zusammenhang wird durch die beiden folgenden Terme ausgedrückt:

$$\tan(\alpha) = \frac{R_P + h}{R_e + H} \; ; \sin(\alpha) = \frac{m_{D-90°} + R_P}{R_e + H}. \quad (10)$$

Eine gegebene erforderliche Mindest-Linkhöhe läßt sich für $m_D$ 90° einsetzen und damit ein Wert für eine mindestens erforderliche Höhe $h_{min-90°}$ gewinnen:

$$h_{min-90°}\left(m_{D-90°}\right) = \tan(\alpha) \cdot \left(R_e + H\right) - R_P = \tan\left(\arcsin\left(\frac{m_{D-90°} + R_P}{R_e + H}\right)\right) \cdot \left(R_e + H\right) - R_P \quad (11)$$

$h_{min-90°}$ (5 km) = 78 km.

Dieses $h_{min-90°}$ ist unabhängig vom Breitengrad β der beiden polnahen Kommunikationsplattformen HAP1 und HAP2. Könnte man diese Sichtbarkeit garantieren, so dürfte man die beiden polnahen Kommunikationsplattformen HAP1 und HAP2 fast antriebslos treiben lassen, da die polaren Winde eine kreisförmige Bahn auf nahezu konstantem Breitengrad erzeugen. Ein typischer Wert von über 70 km ist als Flughöhe für eine polnahe Kommunikationsplattform allerdings zumindest momentan technisch noch ziemlich unrealistisch. Daher ist eine aktive Positionserhaltung erforderlich oder es wird eine Kommunikationsplattform-Konstellation höherer Ordnung, d.h. mit mehr als zwei Kommunikationsplattformen eingesetzt, was im folgenden untersucht werden wird. Übrigens ist dieser Wert von ca. 80 km auch die Höhe, in der eine einzelne Kommunikationsplattform exakt über dem Pol stationiert werden müsste, um den gesamten äquatorialen Gürtel der geostationären Kommunikationssatelliten sehen zu können.

Nachfolgend werden die Formeln für Kommunikationsplattform-Konstellationen höherer Ordnung abgeleitet.

Für Dreiecks-, Quadrat- oder noch höhere Kommunikationsplattform-Anordnungen mit in regelmäßigen n-Ecken angeordneten Kommunikationsplattformen entschärfen sich die Bedingungen für den Mindest-Breitengrad, da nur für die benachbarten Kommunikationsplattformen eine Sichtverbindung bestehen muß. Unter Beibehaltung der Bezeichnungen aus Fig.3 ergeben sich die im folgenden beschriebenen Zusammenhänge. Die polnahen Kommunikationsplattformen sind dann möglichst gleichmäßig auf einem um die Erdrotationsachse zentrierten Kleinkreis mit Radius r über dem Breitengrad β verteilt:

$$r(h,\beta) = (R_P + h) \cdot \sin(90° - \beta) \quad (12)$$

r (35 km, 84°) = 668 km.

Bereits die Verwendung von drei Kommunikationsplattformen im gleichseitigen Dreieck statt zwei gegenüber positionierten Kommunikationsplattform HAP1 und HAP2 (wie in Fig.3) ergibt deutliche Vorteile, wie anhand der folgenden Formeln beschrieben wird. Der Abstand zwischen den Kommunikationsplattformen wird zunächst nach der Formel (1) berechnet. Der Mindestbreitengrad für die Sichtverbindung im gleichseitigen Dreieck berechnet sich dann mit r = d/ sqrt(3) zu:

$$\beta_{min-3}(d, h, m_d) = 90° - \arcsin\left(\frac{r}{R_P + h}\right) = 90° - \arcsin\left(\frac{d}{\sqrt{3} \cdot (R_P + h)}\right)$$

$$(13)$$

$\beta_{min-3}$(1174 km, 35 km, 8 km) = 83,9°.

Weitere höhere Ordnungen sind dann die Quadrat-, Pentagramm-und Hexagramm-Anordnung usw..

Nachfolgend wird der sogenannte Footprint-Radius, also die für eine Kommunikationsanbindung nutzbare Fläche unterhalb einer Kommunikationsplattform, zum Boden berechnet. Abhängig von der geforderten Mindestelevation ε und der Flughöhe h der Kommunikationsplattform ergibt sich ein kreisförmiger. Footprint vom Radius $r_G$:

$$r_G(h, \varepsilon) = R_P \cdot \sin\left[180° - (90° + \varepsilon) - \arcsin\left(\frac{R_P}{R_P + h} \cdot \sin(90° + \varepsilon)\right)\right] \quad (14)$$

$r_G$ (35 km, 10°) = 183 km.

Für die Kommunikation mit Flugzeugen kann die Mindestelevation auf 0° reduziert werden, da kaum bodennahe Störeinflüsse zu berücksichtigen sind. Dann ist der Footprint gleich dem Sichtbarkeitsbereich:

$$r_{G-0}(h) = R_P \cdot \sin\left(\arccos\left(\frac{R_P}{R_P + h}\right)\right) \qquad (15)$$

$r_{G-0}(35\ km) = 664\ km.$

Bei Berücksichtigung der Flughöhe des Flugzeugs ergibt sich sogar noch ein erheblich höherer Sichtbarkeitsradius.

Bei Kombination der drei Footprints einer gleichmäßigen Dreieckskonstellation von Kommunikationsplattformen mit dem einzelnen Sichtradius von $r_G$ ergibt sich ein lückenlos um den Pol abgedecktes, aus drei teilweise überlagerten Kreisen geformtes Gebiet von etwas kleinerer Abmessung als der Außenradius $R_3$:

$$R_3 \approx 2 \cdot r_G. \qquad (16)$$

Damit würde über den Polen in etwa die Fläche nördlich bzw. südlich des jeweiligen 80. Breitengrades komplett mit Kommunikationsdiensten versorgt.

Die Versorgung der polnahen Kommunikationsplattformen mit elektrischer Energie geschieht in vorteilhafter Weise mit Solarzellen, welche aufgrund der schrägstehenden Erdrotationsachse zur Sonnenekliptik im jeweiligen Sommerhalbjahr ununterbrochen mit Sonnenenergie versorgt werden. Im Winterhalbjahr nimmt das tägliche Sonnenbestrahlungsintervall ab und kann bei entsprechend hohen Breitengraden und Höhen der polnahen Kommunikationsplattformen kurzzeitig auf Null sinken. Daher ist eventuell ein halbjährliches Abwechseln der Kommunikationsplattform-Konstellation mit dem anderen Erdpol erforderlich. Aufgrund der großen Flughöhe kann allerdings auch im Winterhalbjahr größtenteils die Solarstromversorgung gewährleistet werden.

Nachfolgend werden zusammenfassend relevante Vorteile des gemäß der Erfindung ausgebildeten Kommunikationssystems angegeben:

- Es ergeben sich kürzere Strecken für die einzelnen Inter-Satelliten-Links und damit höhere Empfangsintensitäten. Die maximale Strecke in erfindungsgemäßen Kommunikationssystemen mit polnahen Kommunikationsplattformen und geostationären Kommunikationssatelliten beschränkt sich damit auf etwa 42000 km, was nur etwa 55 % der Strecke im Vergleich zu drei geostationären Kommunikationssatelliten im gleichseitigen Dreieck ausmacht. Diese Einsparung entspricht für den Kommunikationslink etwa 5 dB, womit z.B. die Sendeleistung auf ein Drittel reduziert oder die Übertragungsrate zwischen den geostationären Kommunikationssatelliten ungefähr verdreifacht werden könnte. Für die Verbindung von zwei in Opposition stehenden geostationären Kommunikationssatelliten ergibt sich sogar eine Verbesserung von fast 6 dB oder knapp dem Vierfachen. Eine Signalregeneration in den polnahen stratosphärischen Kommunikationsplattformen ist dann natürlich ebenfalls möglich und sinnvoll.
- Bei polaren stratosphärischen Kommunikationsplattformen als Quasi-Boden-Zwischenstationen von optischen Links gibt es keine Probleme mit der Mindestelevation, wie sonst bei Mikrowellen-Bodenstationen üblich; solange der optische Link auf seinem Weg nicht zu tief in die Atmosphäre eindringt, ist hier weder mit hoher zusätzlicher Dämpfung noch störenden Einflüssen von terrestrischer Interferenz zu rechnen.
- Es wird eine direkte Kommunikationsverbindung von zwei in Opposition stehenden, also längengradmäßig um 180° versetzten geostationären Kommunikationssatelliten ermöglicht, die sonst durch die Erdabschattung nicht möglich wäre.
- Die vollständige Vernetzung von Satellitenkonstellationen mit mehr als zwei geostationären Kommunikationssatelliten mit jeweils nur einem Terminal für ein optisches Inter-Satelliten-Link (OISL; Optical Inter-Satellite Link) auf jedem geostationären Kommunikationssatelliten ist möglich, da die Vernetzung durch die polnahen stratosphärischen Kommunikationsplattformen geschieht. Ansonsten sind in üblicher Weise mindestens zwei solche Terminals nötig.
- Durch die Vernetzung in den wieder einholbaren und damit wartbaren oder durch neuere Technologien ersetzbaren polnahen stratosphärischen Kommunikationsplattformen kann die Kapazität des globalen Kommunikationssystem in jeder Hinsicht nachträglich erhöht und die Lebensdauer erheblich verlängert werden. Die polnahen Kommunikationsplattformen werden in vorteilhafter Weise untereinander ebenfalls durch optische Kommunikationsterminals vernetzt.
- Da die polaren Regionen jeweils mindestens ein halbes Jahr ununterbrochen von der Sonne bestrahlt werden, ist die Energieversorgung der polnahen stratosphärischen Kommunikationsplattformen innerhalb dieses Zeitraums sichergestellt. Es ist kaum eine Speicherung der elektrischen Energie durch schwere Akkumulatoren nötig. Im Winterhalbjahr wird auf eine gleiche Kommunikationsplattform-Konstellation über der anderen Polarregion umgeschaltet.

- Durch zusätzliche Mobilfunkantennen an den polnahen stratosphärischen Kommunikationsplattformen kann die Polarregion mit Kommunikationsdiensten versorgt werden, was z.B. für die zukünftigen polaren Flugrouten oder für Polarstationen von Bedeutung ist und durch die gegenwärtigen Satellitenkommunikationsnetze mit Satelliten auf inklinierten niedrigen Erdumlaufbahnen (LEO; Low Earth Orbit) oder auch äquatorialen geostationären Kommunikationssatelliten nicht machbar ist. Um diese Mobilfunk-Funktion auch im Winterhalbjahr aufrechtzuerhalten, reicht möglicherweise die tagsüber auch im Winterhalbjahr in der Polregion kurzzeitig vorhandene Sonneneinstrahlung zum Aufladen von Akkumulatoren aus.

- Im Unterschied zu stratosphärischen Kommunikationsplattformen in mittleren bis äquatorialen Breiten sind polnahe stratosphärische Kommunikationsplattformen kaum starken Winddriften ausgesetzt. Eine Positionserhaltung und -steuerung der Plattformen ist daher im Polbereich erheblich einfacher. Da die polare Tropopause sehr niedrig liegt, liegt darüber hinaus die Wolkendecke in polaren Regionen erheblich niedriger als in anderen Breiten, so dass im Polbereich die optischen Links problemlos durch die Atmosphäre unter sehr hoher Linkverfügbarkeit geführt werden können.

Bezugszeichenliste

| 1 | Erde |
| 2, 3, 4 | Geostationäre Kommunikationssatelliten |
| 5 | Geostationäre Erdumlaufbahn |
| 6, 7, 8 | Inter-Satelliten-Link |
| 9 | Pol |
| 10 | Polnaher Breitengrad |
| 11, 12, 13 | Kommunikationsplattformen |
| E | Erde |
| GEO1, GEO2 | Geostationäre Kommunikationssatelliten |
| HAP1, HAP2 | Polnahe Kommunikationssatelliten |
| NP | Nordpol |
| SP | Südpol |

**Patentansprüche**

1. Globales Kommunikationssystem unter Einbeziehung von geostationären Kommunikationssatelliten (2, 3, 4), die über dem Äquator in einer geosynchronen Bahn (5) fliegen und für typische Satellitenkommunikationsdienste wie z.B. Mobiltelefonie, Multimediadienste, Telefongesprächvermittlung, Fernsehübertragung oder dergleichen genutzt werden, und in einer ersten Alternativform unter zusätzlicher Miteinbeziehung einer einzigen, in der Stratosphäre positionierten atmosphärischen Kommunikationsplattform, die als High-Altitude-Platform bezeichnet wird und in einer solchen Höhe und geographischen Lage positioniert ist, dass zwischen jedem der geostationären Kommunikationssatelliten und der Kommunikationsplattform eine Sichtverbindung, also eine sogenannte "Line of Sight (LOS)" besteht, oder in einer zweiten Alternativform unter zusätzlicher Miteinbeziehung von zwei oder mehr solchen in der Stratosphäre positionierten atmosphärischen Kommunikationsplattformen (11, 12, 13), die in einer solchen Höhe und geographischen Lage positioniert sind, dass einerseits zwischen ihnen untereinander eine Sichtverbindung, also ebenfalls eine sogenannte "Line of Sight (LOS)" besteht und andererseits zwischen jedem der geostationären Kommunikationssatelliten und zumindest einer der Kommunikationsplattformen auch eine solche Sichtverbindung vorliegt, **dadurch gekennzeichnet, dass** in der ersten Alternativform die einzige Kommunikationsplattform im wesentlichen senkrecht über dem Nord- oder Südpol (9) positioniert ist und eine LOS-Sichtverbindung zwischen jedem der geostationären Kommunikationssatelliten und dieser einzigen Kommunikationsplattform besteht, die eine Relaisstation zwischen den geostationären Kommunikationssatelliten bildet, und dass in der zweiten Alternativform die zwei oder mehr miteinander in LOS-Sichtverbindung stehenden Kommunikationsplattformen (11, 12, 13) nicht senkrecht über dem Nord- bzw. Südpol, sondern in einer davon abweichenden geographischen Breite (10) nahe dem Nord- bzw. Südpol in der Stratosphäre positioniert sind, und eine LOS-Sichtverbindung zwischen jedem der geostationären Kommunikationssatelliten und zumindest einer der über dem betreffenden Polgebiet befindlichen Kommunikationsplattformen besteht, die eine Relaisstation zu den geostationären Kommunikationssatelliten bilden.

2. Globales Kommunikationssystem nach Anspruch 1, **dadurch gekennzeichnet, dass** bei Vorhandensein mehrerer Kommunikationsplattformen (11, 12, 13) über einem Polgebiet zwischen diesen jeweils eine optische Freistrahlverbindung, d.h. ein sogenanntes Optical Free Space Communications Link (OFCL), vorgesehen ist und dass zwischen den Kommunikationsplattformen und den mit diesen in Sichtverbindung stehenden geostationären Kommunikationssatelliten (2, 3, 4) ebenfalls optische Freistrahlverbindungen bestehen.

3. Globales Kommunikationssystem nach Anspruch 1, **dadurch gekennzeichnet, dass** bei Vorhandensein mehrerer Kommunikationsplattformen (11, 12, 13) über einem Polgebiet zwischen diesen jeweils eine Mikrowellen-Richtfunkverbindung vorgesehen ist und dass zwischen der/den Kommunikationsplattform/en und den mit dieser/n in Sichtverbindung stehenden geostationären Kommunikationssatelliten (2, 3, 4) ebenfalls Mikrowellen-Richtfunkverbindungen bestehen.

4. Globales Kommunikationssystem nach Anspruch 2 oder 3, **gekennzeichnet durch** eine Kombination von optischen Freistrahlverbindungen und Richtfunkverbindungen.

5. Globales Kommunikationssystem nach einem der vorhergehenden Ansprüche, **dadurch gekennzeichnet, dass** die geostationären Kommunikationssatelliten (2, 3, 4) untereinander über eine oder mehrere im Polbereich positionierte Kommunikationsplattformen (11, 12, 13) als Vermittlungsknoten vernetzt sind, so dass pro geostationärem Kommunikationssatelliten nur ein optisches Freistrahlterminal oder Richtfunkterminal anstelle von sonst zwei bei Inter-Satelliten-Links erforderlich ist.

6. Globales Kommunikationssystem nach Anspruch 5, **dadurch gekennzeichnet, dass** zwei in Opposition stehende, d.h. um 180 Längengrade zueinander versetzte geostationäre Kommunikationssatelliten (GEO1, GEO2) über eine oder mehrere im Polbereich positionierte Kommunikationsplattformen (HAP1, HAP2) als Vermittlungsknoten verbunden sind.

7. Globales Kommunikationssystem nach einem der vorhergehenden Ansprüche, **dadurch gekennzeichnet, dass** die polnahen Kommunikationsplattformen (11, 12, 13) an einem stratosphärischen Ballon angebracht sind.

8. Globales Kommunikationssystem nach einem der Ansprüche 1 bis 6, **dadurch gekennzeichnet, dass** die polnahen Kommunikationsplattformen (11, 12, 13) an einem Zeppelin angebracht sind, der ionengetriebenen sein kann.

9. Globales Kommunikationssystem nach einem der Ansprüche 1 bis 6, **dadurch gekennzeichnet, dass** die polnahen Kommunikationsplattformen (11, 12, 13) an einem stratosphärischen Leichtbauflugzeug angebracht sind.

10. Globales Kommunikationssystem nach einem der Ansprüche 7 bis 9, **gekennzeichnet durch** eine Positionserhaltung und Positionssteuerung der Kommunikationsplattformen (11, 12, 13) durch Flugmotoren.

11. Globales Kommunikationssystem nach einem der vorhergehenden Ansprüche, **dadurch gekennzeichnet, dass** bei Verwendung von zwei oder mehr polnahen Kommunikationsplattformen (11, 12, 13) diese einen typischen Abstand von etwa 500 km bis 1300 km haben.

12. Globales Kommunikationssystem nach einem der vorhergehenden Ansprüche, **gekennzeichnet durch** eine Stromversorgung der polnahen Kommunikationsplattformen (11, 12, 13) mittels Solarzellen, welche auf Grund der schrägstehenden Erdrotationsachse zur Sonnenekliptik im jeweiligen Sommerhalbjahr ununterbrochen mit Sonnenenergie versorgt werden.

13. Globales Kommunikationssystem nach Anspruch 12, **dadurch gekennzeichnet, dass** eine oder mehrere Kommunikationsplattformen (HAP1, HAP2) sowohl über dem Nordpolbereich (NP) als auch über dem Südpolbereich (SP) positioniert sind und dass halbjährlich zwischen ihnen gewechselt wird, so dass die jeweils für mehr als ein halbes Jahr gewährleistete Ausleuchtung der polnahen Kommunikationsplattformen durch Sonnenstrahlung zur ununterbrochenen solaren Energieversorgung ganzjährig genutzt werden kann.

14. Globales Kommunikationssystem nach einem der vorhergehenden Ansprüche, **dadurch gekennzeichnet, dass** an der/den in Polnähe positionierten Kommunikationsplattform/en (11, 12, 13) zusätzlich Mobilfunkantennen zur Versorgung der Polarregion vorgesehen sind, so dass Flugzeuge auf polaren Flugrouten und andere Nutzer mit Kommunikationsdiensten auf der Basis von Mobilfunk-Kommunikationstechnik mit Kommunikationsdiensten abgedeckt sind, wobei durch die optische Vernetzung oder Richtfunk-Vernetzung der polnahen Kommunikationsplattformen mit den geostationären Kommunikationssatelliten (2, 3, 4) die Anbindung an das globale Kommunikationsnetz erfolgt.

**Claims**

1. A global communications system including geostationary communications satellites (2, 3, 4) flying above the equator in a geosynchronous orbit (5) and used for typical satellite communications services such as e.g. mobile telephony, multimedia services, telephone call exchange, television transmission or the like in a first alternative with the additional inclusion of a sole atmospheric communications platform positioned in the stratospheric, termed high-altitude platform, and positioned at such an altitude and geographic position that a line of sight (LOS) exists between each of the geostationary communications satellites and the communications platform, or in a second alternative additional including two or more atmospheric communications platforms (11, 12, 13) positioned in the stratospheric, positioned at such an altitude and geographic position that, on the one hand, likewise a line of sight (LOS) exists between each of them and, on the other, also a line of sight exists between each of the geostationary communications satellites and at least one of the communications platforms, **characterized in that** in the first alternative the sole communications platform is positioned substantially perpendicular above the north or south pole (9) with a LOS link existing between each of the geostationary communications satellites and the sole communications platform forming a relay station between the geostationary communications satellites, and that in the second alternative the two or more communications platforms (11, 12, 13) linked by line of sight (LOS) are not positioned perpendicular above the north or south pole but at a different latitude (10) near to the north or south pole in the stratospheric and a LOS link existing between each of the geostationary communications satellites and at least one in the communications platforms located above the corresponding polar region forming relay stations to the geostationary communications satellites.

2. The global communications system as set forth in claim 1, **characterized in that** when a number of communications platforms (11, 12, 13) are positioned above a polar region an optical free-space communications link (OFCL) is provided each of them and between the communications platform(s) and the geostationary communications satellite (s) (2, 3, 4) an optical free-space communications link likewise exists.

3. The global communications system as set forth in claim 1, **characterized in that** when a number of communications platforms (11, 12, 13) are positioned above a polar region a microwave radio relay link is provided between them and that microwave radio relay links likewise exist between the communications platform(s) and the geostationary communications satellites (2, 3, 4) in a LOS link therewith.

4. The global communications system as set forth in claim 2 or 3, **characterized by** a combination of optical free-space communications links and radio relay links.

5. The global communications system as set forth in any of the preceding claims, **characterized in that** the geostationary communications satellites (2, 3, 4) are interlinked via one or more communications platforms (11, 12, 13) positioned in the polar region as switching nodes so that for each geostationary communications satellite only one optical free-space communications terminal or radio relay terminal is needed instead of two as otherwise needed for inter-satellite links.

6. The global communications system as set forth in claim 5, **characterized in that** to link two geostationary communications satellites (GEO1, GEO2) parked in opposition, i.e. staggered by longitude degree of 180 via one or more communications platforms (HAP1, HAP2) positioned in the polar region as switching nodes.

7. The global communications system as set forth in any of the preceding claims, **characterized in that** the near-pole communications platforms (11, 12, 13) of the system are carried by a stratospheric balloon.

8. The global communications system as set forth in any of the claims 1 to 6, **characterized in that** the near-pole communications platforms (11, 12, 13) are carried by a blimp as may be ion-powered.

9. The global communications system as set forth in any of the claims 1 to 6, **characterized in that** the near-pole communications platforms (11, 12, 13) are carried by a stratospheric lightweight aircraft.

10. The global communications system as set forth in any of the claims 7 to 9, **characterized in that** maintaining and controlling the position of the communications platforms (11, 12, 13) is assured by aircraft engines.

**11.** The global communications system as set forth in any of the preceding claims, **characterized in that** when using two or more near-pole communications platforms (11, 12, 13) these are typical distanced in a range of approximately 500 to 1300 km.

**12.** The global communications system as set forth in any of the preceding claims, **characterized by** a power supply of the near-pole communications platforms (11, 12, 13) by means of solar cells which due to the earth's inclined axis of rotation to the ecliptic of the sun receive a continuous supply of solar energy in each summer half year.

**13.** The global communications system as set forth in claim 12, **characterized in that** one or more communications platforms (HAP1, HAP2) are positioned both above the north pole region (NP) and south pole region (SP) with a change made half-yearly so that irradiation of the near-pole communications platforms by the sun can be utilized all year round for a continual supply of solar energy.

**14.** The global communications system as set forth in any of the preceding claims, **characterized in that** mobile radio antennas for supplying the polar regions are provided on the communications platform(s) (11, 12, 13) positioned near-pole so that aircraft on polar flight routes receive communications service coverage on the basis of mobile radio communications, interlinking the near-pole communications platforms to the geostationary communications satellites (2, 3, 4) by optical free-space communications link or radio relay making the link to the global communications network.

**Revendications**

**1.** Système de communication global utilisant des satellites de communication géostationnaires (2, 3, 4) qui volent au-dessus de l'équateur selon une orbite géosynchrone (5) et sont utilisés pour des services typiques de communication par satellites comme par exemple la téléphonie mobile, des services multimédia, la communication de conversations téléphoniques, la transmission de télévision ou analogue et, dans une première forme alternative, moyennant l'utilisation supplémentaire conjointe d'une seule plateforme atmosphérique de communication, qui est positionnée dans la stratosphère, est désignée comme étant une plateforme de haute altitude et est disposée à une hauteur telle et dans une position géographique telle qu'il existe entre chacun des différents satellites de communication géostationnaires et la plateforme de communication, une liaison visuelle, également dite "Line of Sight (LOS)", ou, dans une seconde forme alternative, moyennant l'utilisation supplémentaire simultanée conjointe de deux ou de plus de deux plateformes atmosphériques de communication (11, 12, 13) qui sont positionnées dans la stratosphère et qui sont disposées à une hauteur telle et dans une position géographique telle que, d'une part, il existe entre elles une liaison visuelle, également dite "Line of Sight (LOS)", et que, d'autre part, il existe également une telle liaison visuelle entre chacun des satellites de communication géostationnaires et au moins l'une des plateformes de communication, **caractérisé en ce que**, dans la première forme alternative, la plateforme unique de communication est positionnée essentiellement perpendiculairement au-dessus du pôle nord ou du pôle sud (9) et qu'il existe entre chacun des satellites de communication géostationnaires et cette plateforme de communication unique une liaison visuelle LOS, qui forme une station relais entre les satellites de communication géostationnaires et **en ce que**, dans la seconde forme alternative, les deux ou plus de deux plateformes de communication (11, 12, 13) qui sont reliées entre elles par une liaison visuelle LOS ne sont pas positionnées verticalement au-dessus du pôle nord ou du pôle sud, mais à une latitude géographique (10), qui s'en écarte, à proximité du pôle nord ou du pôle sud dans la stratosphère, et qu'il existe une liaison visuelle LOS entre chacun des satellites de communication géostationnaires et l'une des plateformes de communication situées dans la région polaire considérée, qui forment une station relais avec les satellites de communication géostationnaires.

**2.** Système de communication globale selon la revendication 1, **caractérisé en ce que**, dans le cas de la présence de plusieurs plateformes de communication (11, 12, 13), il est prévu, au-dessus d'une région polaire entre ces plateformes, une liaison optique à rayonnement libre, c'est-à-dire dite Optical Free Space Communications Link (OFCL), et **en ce que** des liaisons optiques à rayonnement libre existent également entre les plateformes de communication et les satellites de communication géostationnaires (2, 3, 4) qui sont en liaison visuelle avec ces plateformes.

**3.** Système de communication globale selon la revendication 1, **caractérisé en ce que**, dans le cas de la présence de plusieurs plateformes de communication (11, 12, 13), il est prévu au-dessus d'une région polaire entre ces plateformes respectivement une liaison radio à micro-ondes, et **en ce qu'**entre la ou les plateformes de communication et les satellites de communication géostationnaires (2, 3, 4) reliés selon une liaison visuelle avec cette plateforme ou ces plateformes, il existe également des liaisons radio à micro-ondes.

**4.** Système de communication globale selon la revendication 2 ou 3, **caractérisé par** une combinaison de liaisons optiques à rayonnement libre et de liaisons radio directionnelles.

**5.** Système de communication globale selon l'une des revendications précédentes, **caractérisé en ce que** les satellites de communication géostationnaires (2, 3, 4) sont maillés entre eux par l'intermédiaire d'une ou de plusieurs plateformes de communication (11, 12, 13) positionnées dans la région polaire, en tant que noeuds de commutation, de sorte que pour chaque satellite de communication géostationnaire un seul terminal optique à rayonnement libre ou terminal radio est nécessaire au lieu de deux dans des liaisons entre satellites.

**6.** Système de communication globale selon la revendication 5, **caractérisé en ce que** deux satellites de communication géostationnaires (GEO1, GEO2), qui sont disposés en opposition, c'est-à-dire en étant décalés l'un par rapport à l'autre de 180 degrés de longitude, sont reliés par l'intermédiaire d'une ou de plusieurs plateformes de communication (HAP1, HAP2), positionnées dans la région polaire, en tant que noeuds de commutation.

**7.** Système de communication globale selon l'une des revendications précédentes, **caractérisé en ce que** les plateformes de communication (11, 12, 13) proches du pôle sont installées sur un ballon atmosphérique.

**8.** Système de communication globale selon l'une des revendications 1 à 6, **caractérisé en ce que** les plateformes de communication (11, 12, 13) proches du pôle sont installées sur un dirigeable, qui peut être mû par propulsion ionique.

**9.** Système de communication globale selon l'une des revendications 1 à 6, **caractérisé en ce que** les plateformes de communication (11, 12, 13) proches du pôle sont installées sur un avion stratosphérique de structure légère.

**10.** Système de communication globale selon l'une des revendications 7 à 9, **caractérisé par** un maintien en position et une commande de position des plateformes de communication (11, 12, 13) par des moteurs d'avion.

**11.** Système de communication globale selon l'une des revendications précédentes, **caractérisé en ce que**, dans le cas de l'utilisation de deux ou de plus de deux plateformes de communication (11, 12, 13) proches du pôle, ces dernières présentent une distance typique d'environ 500 km à 1300 km.

**12.** Système de communication globale selon l'une des revendications précédentes, **caractérisé par** une alimentation en courant des plateformes de communication (11, 12, 13) proches du pôle à l'aide de piles solaires, qui sont alimentées de façon ininterrompue en énergie solaire en raison de l'axe oblique de rotation de la terre par rapport au plan de l'écliptique, respectivement dans la demi-année estivale respective.

**13.** Système de communication globale selon la revendication 12, **caractérisé en ce qu'**une ou plusieurs plateformes de communication (HAP1, HAP2) sont positionnées aussi bien au-dessus de la région du pôle nord (NP) qu'au-dessus de la région du pôle sud (SP) et **en ce qu'**une commutation entre elles est effectuée tous les six mois de sorte que l'éclairement, qui est garanti pour plus d'une demi-année, des plateformes de communication proches des pôles par le rayonnement solaire peut être utilisé toute l'année pour une alimentation en énergie solaire ininterrompue.

**14.** Système de communication globale selon l'une des revendications précédentes, **caractérisé en ce que** la ou les plateformes de communication (11, 12, 13) positionnées à proximité des pôles sont équipées en outre d'antennes radio mobiles pour alimenter la région polaire, de sorte que des avions sur des trajectoires de vol polaires et d'autres utilisateurs sont desservis par des services de communication sur la base de la technique des communications radio mobiles, la liaison au réseau de communication global s'effectuant au moyen du maillage optique ou du maillage radio directionnel des plateformes de communication proches des pôles avec les satellites de communication géostationnaires (2, 3, 4).

Fig.1

Fig.2

Fig.3